# EUROPEAN PATENT SPECIFICATION

(11) **EP 1 600 276 B1**
(45) Date of publication and mention of the grant of the patent: **30.07.2008**
(21) Application number: 04012265.7
(22) Date of filing: 24.05.2004
(51) Int. Cl.: B29C 47/38, B29B 7/46, B29B 9/06

(54) **Use of a counter-rotating twin screw extruder for compounding multimodal polymer compositions**
Verwendung eines gegenläufigen Doppelschneckenextruders zur Verschmelzung von multimodalen Polymerzusammensetzungen
Utilisation d'une extrudeuse à deux vis contra-rotatives pour le mélange de compositions de polymères multimodales

(43) Date of publication of application: 30.11.2005
(73) Proprietor: Borealis Technology Oy, 06101 Porvoo (FI); Japan Steel Works Ltd., Hiroshima City (JP)
(72) Inventor: Ek, Carl-Gustaf, 42658 Västra Frölunda (SE); Äärilä, Jari, 06100 Porvoo (FI); Syre, Arne, 03960 Strathelle (NO); Inoue, Shigeki c/o Japan Steel Works Ltd., Hiroshima City (JP); Iwai, Junichi c/o Japan Steel Works Ltd., Hiroshima City (JP); Yamazawa, Takayuki c/o Japan Steel Works Ltd., Hiroshima City (JP); Mizutani, Yutaka c/o Japan Steel Works Ltd., Hiroshima City (JP)
(74) Representative: Kador & Partner

(56) References cited:
- WO-A-99/51649
- US-A- 3 565 403
- US-B1- 6 280 074
- PATENT ABSTRACTS OF JAPAN vol. 0050, no. 85 (C-057), 3 June 1981 (1981-06-03) & JP 56 031433 A (JAPAN STEEL WORKS LTD:THE), 30 March 1981 (1981-03-30) -& DATABASE WPI Section Ch, Week 198120 Derwent Publications Ltd., London, GB; Class A31, AN 1981-35285D XP002302346 -& JP 56 031433 A (JAPAN STEEL WORKS LTD) 30 March 1981 (1981-03-30)
- PATENT ABSTRACTS OF JAPAN vol. 0060, no. 11 (C-088), 22 January 1982 (1982-01-22) & JP 56 136633 A (KOBE STEEL LTD), 26 October 1981 (1981-10-26) -& DATABASE WPI Section Ch, Week 198149 Derwent Publications Ltd., London, GB; Class A31, AN 1981-90057D XP002302347 -& JP 56 136633 A (KOBE STEEL LTD) 26 October 1981 (1981-10-26)

## Description

The invention relates to the use of a counter-rotating twin screw extruder for compounding polymers.

When producing a polymer composition, the ingredients thereof, as different polymers, fillers and additives, as anti-oxidants, light stabilizers, etc., have to be mixed intimately in order to obtain a composition as homogenous as possible. This is done by compounding the ingredients in a compounding machine as a counter-rotating twin-screw extruder.

While on one hand, the compounding should be carried out at a high temperature and shearing rate in order to achieve a homogenous composition, degradation of the polymers is caused by too severe conditions.

Particular problems are encountered when compounding multimodal polymers, as multimodal polyethylene materials. Multimodal polymers are in many respects superior to corresponding mono-modal materials. Multimodal polyethylene materials and, more particularly, bimodal polyethylene materials have a widespread and increasing use as materials for various applications as pipes, wires and cables, films, blow-molded and injection-molded articles, etc.

Multimodal polymer compositions such as bimodal polyethylene materials consist of a low molecular weight polymer fraction and a high molecular weight fraction. The high molecular weight molecules are known to be most sensitive to the compounding conditions needed to achieve the desired degree of homogenization.

For instance, undispersed domains of high molecular weight molecules appear as white spots in colored materials. The white spots may adversely affect the strength of the article. Further, when compounding polymer compositions, e.g. for the production of a film, gel particles appear as disfiguring spots in the finished film which consist of high molecular weight polymer not adequately compounded. Although compounding at higher temperatures and shear rates may remove the white spots and gel particles, degradation of the high molecular weight molecules may occur which negatively effects the otherwise superior properties of the multimodal polymer material.

Thus, the white spots and gel particles are a serious problem in the polymer industry and a solution of the problem would mean the removal of a serious obstacle to use otherwise superior multimodal polymer compositions.

In EP-A-645 232 is described a way of reducing this problem by adding liquid nitrogen or solid carbon dioxide to the polymer feed. This is, however, a rather costly way. According to WO 98/15591, the problems may be tackled by compounding at a low shear rate so that the temperature of the polymer increases slowly. This requires a highly precise control of the process conditions of the counter-rotating twin screw extruder, however, and the production capacity is rather low.

US-A-6,409,373 discloses a counter-rotating twin-screw extruder having a mixing section upstream of and a mixing section downstream of a throttle valve or gate plates, each mixing section comprising forward-conveying wings and backward-conveying wings downstream of the forward-conveying wings. Although in a monomodal polymer material the number of gels may be reduced, it is not possible to obtain multimodal polymer materials of high homogeneity without adversely affecting the superior quality of multimodal polymer materials with the known extruder.

JP 56 031 433 A discloses a twin screw extruder having a mixing section upstream the throttle value which mixing section consists of a forward conveying wing element followed by a backward conveying wing element. JP 56 136 633 A discloses a twin screw extruder having a mixing section upstream the throttle valve wich comprises two mixing zones each having two forward conveying wings and two backward conveying wings downstream the forward conveying wings.

It is an object of the invention to obtain multimodal polymer materials of high homogeneity with a high production capacity at low cost.

This object is attained with the use of counter-rotating twin-screw extruder according to claim 1 for compounding.

The counter-rotating twin extruder comprises a mixing section having at least two mixing zones, each mixing zone consisting of at least one, preferably at least two forward-conveying wings and at least one, preferably at least two backward-conveying wings downstream of the forward-conveying wings on each rotor.

The number of forward-conveying wings and the number of backward-conveying wings of each mixing zone preferably corresponds to the number of flights of the screws of the conveying section upstream of the mixing section. For instance, in each mixing zone two, three or four forward-conveying wings and backward-conveying wings, respectively, may be used.

To adjust the filling degree of the mixing section, a throttle valve or gate is usually provided between the mixing section and the discharge port of the extruder. Instead of a throttle valve, a gear pump connected to the discharge valve may be used to control the filling degree in the mixing section. As a throttle valve, a rotary slot bar may be used as disclosed in JP-A-3004647. In that solution two bars extend across the rotors which have a convex side rotating in a concave depression in the barrels, the throttle gap being defined by the distance between the rotors and the throttle edge of the bars.

The twin screw extruder of used in the present invention has two mixing sections, namely one upstream of the throttle valve and one downstream thereof. Whereas the first mixing section upstream of the throttle valve comprises preferably at least two mixing zones, each mixing zone having preferably at least two forward-conveying wings and at least two backward-conveying wings, the second mixing section downstream of the throttle valve has preferably a lower number of mixing zones, for instance only one mixing zone when the first mixing section has two mixing zones.

In the first mixing section, mainly dispersive mixing takes place, so that the particles of the powder material to be mixed are broken up, whereas in the second mixing section, mainly distributive mixing occurs. That is, in the first mixing zone of the first mixing section next to the screws of the conveying section, the polymer material starts to melt and continues to melt in the second mixing zone of the first mixing section, and then the polymer melt is charged through the throttle valve into the second mixing section. There, the melt is kneaded further to distribute the different polymers and optionally, fillers, additives and so forth homogeneously in the melt. Due to its high dispersive mixing efficiency of the at least two mixing zones of the first mixing section, the twin screw extruder of the invention is particularly effective for compounding multimodal polymer materials.

From the second mixing section, the polymer melt is discharged through the discharge port into a gear pump or a discharge extruder. From the gear pump or the discharge extruder, the melt is passed through a die plate, after which it is cooled and cut to pellets. Alternatively, the melt is discharged through a discharge port directly after the first mixing section.

Whereas the filling degree of the first mixing section is determined by the throttle valve, the filling of the second mixing section downstream of the throttle valve may be adjusted by the suction side pressure of the gear pump.

Preferably, the upstream ends of the forward-conveying wings of the first mixing zone of the first mixing section are positioned at the downstream end of the screws of the first conveying section, and it is also preferred that the upstream ends of the forward-conveying wings of the mixing zone of the second mixing section are positioned at the downstream ends of the of the screws of the second conveying section. That is, the screws of the first and second conveying sections and the forward-conveying wings of the first zone of the first mixing section and of the mixing zone of the second mixing section, respectively, preferably are positioned to form continuous closed flights.

In the first mixing section, the downstream end of the forward-conveying wings and the upstream end of the backward-conveying wings of each mixing zone are preferably offset to form a passage for the material to be mixed. Due to these passages, a mixing action in axial direction occurs, and it is avoided that material, in particular unmelted material, is pressed between the barrels and the wings on the rotors, which would cause a deflection of the rotors resulting in a non-uniform mixing due to a non-uniform gap between the wings and the barrels.

The offset between the forward-conveying wings and the backward-conveying wings of each mixing zone usually depends on the number of flights of the screw in the conveying section. In case of two flights, the offset may be about 90° in the circumferential direction, and in case of three flights, about 60°.

In the first mixing section, the downstream ends of the forward-conveying wings and the upstream ends of the backward-conveying wings of one mixing zone and the downstream ends of the backward-conveying wings of one mixing zone and the upstream ends of the forward-conveying wings of the next mixing zone are positioned in the same radial plane, respectively. However, an axial shift of those ends is also possible, so that for instance in one mixing zone the upward ends of the backward-conveying wings are upstream of the downstream ends of the forward-conveying wings of this zone. Forming those passages between the wings is particularly preferred when the screws of the first conveying section have only two flights. In case of three flights or more, the rotor is stiffer so that the downstream ends of the forward-conveying wings and the upstream ends of the backward conveying wings of each mixing zone may be connected to form a "V". Because the viscosity of the polymer melt is lower in the second mixing section due to higher temperature, the forward-conveying wings and the backward-conveying wings of the mixing zone of the second mixing section form such Vs. That is, the forward-conveying wings and the backward-conveying wings of the second mixing section are preferably positioned to form continuous closed flights having the shape of a "V".

The length of the forward-conveying wings is preferably longer than that of the backward-conveying wings in each mixing zone, and the length of the backward-conveying wings in the first mixing zone of the first mixing section is preferably shorter than the length of the backward-conveying wings in the mixing zone of the first mixing section downstream of the first mixing zone.

The ratio of the length (L) of the wings to the inner diameter (D) of the barrels is preferably between 0.3 and 2.0. For instance the L/D ratio of the forward-conveying wings of both mixing sections is about 1, the L/D ratio of the backward conveying wings of the first mixing zone of the first mixing section and the second mixing section about 1 /2 and the L/D ratio of the backward-conveying wings of the second mixing zone of the first mixing section is about 3/4.

The lead or pitch of the wings of the mixing sections may vary between 2 and 6D and usually all wings have the same lead. If there is different lead along the screw, then normally in each mixing zone there is the same lead.

The radial clearance of the wings of the first mixing zone of the first mixing section is preferably greater than the radial clearance of the wings of the second mixing zone of the first mixing section, and the radial clearance of the wings of the second mixing section is preferably smaller than the clearance of the conveying wings of the second mixing zone of the first mixing section. That is, the more the material melts and the lower its viscosity, the smaller is the radial clearance. Based on the inner diameter (D) of the barrels, the radial clearance may vary between 0.01 and 0.05 D. Usually, the radial clearance of the forward-conveying wings and the backward-conveying wings of one mixing zone are equal to obtain uniform balanced mixing. The tip width of the conveying wings may vary between 0.01 and 0.05 D.

Whereas the two barrels form a common chamber in which the rotors counter-rotate, no or only slight intermeshing takes place between the two rotors.

When compounding a multimodal polymer with a twin screw extruder according to claim 1, at a given specific energy input (SEI), the homogeneity of the product is considerably improved. Thus, the degradation of polymer chains is significantly reduced, which leads to an improvement of the optical and mechanical properties of the compounded product, especially long-term mechanical properties as slow-crack growth resistance, i.e. resistance to internal pressure, exemplified by pipe pressure testing.

In addition, the control of SEI by adjusting the throttle valve is more conventient. While the prior art rotor design may give large variation of SEI with a minor adjustment of the throttle valve in some positions of the valve, the present design gives a nearly uniform and controllable response of SEI over the whole adjustment range of the throttle valve. This makes it easier to balance between a desired homogeneity and SEI level to avoid degradation of the polymer.

The twin screw extruder according to claim 1 is useful for compounding multimodal polymer compositions, particularly compositions comprising a low molecular weight ethylene polymer, for instance with a melt flow rate MFR₂ (D)of about 0.1 to 5,000 g/10 min, and a high molecular weight polymer, for instance with a MFR₂₁ (G) of 0.01 to 10.0 g/10 min, where MFR₂ (D) and MFR₂₁ (G) are determined according to ISO 1133, conditions 4 and 7, respectively.

The compounded product is particularly useful for making coloured bimodal polyethylene pipe materials comprising the bimodal ethylene polymer as a base resin and the pigment, optionally as compounded into a carrier polymer in the form of a master batch. The coloured materials preferably have a high homogeneity rating of 5 or less, more preferably 3 or less, and still more preferably 2 or less, where the homogeneity is defined as the dispersion of white spots measured according to the method ISO 11420: 1996 (E) which method is normally used for evaluation of carbon black agglomerates in polyolefin pipes. Suitable pigments are, among others, carbon black, ultramarine blue and phthalocyanine blue. Of these, carbon black is especially preferred. In addition, the pipes have excellent mechanical properties and anti-sagging properties. Also high-density polyethylene films with excellent optical properties may be obtained, as well as large blow-molded articles and wire and cable products such as the slotted cores of optical cables. Said bimodal pipe materials are disclosed in WO 00/01765 and WO 00/22040, said bimodal film materials are disclosed in WO 99/51649, said bimodal blow-molding materials are disclosed in WO 01/14122 and said slotted core materials in WO 02/063345.

The twin screw extruder will be explained in more detail below with reference to the enclosed drawing, in which:
- Fig. 1: shows a longitudinal section through the extruder;
- Fig. 2: shows a cross-section along the line II-II in Fig. 1; and
- Fig. 3: shows a graph of the dispersion as a function of specific energy input.

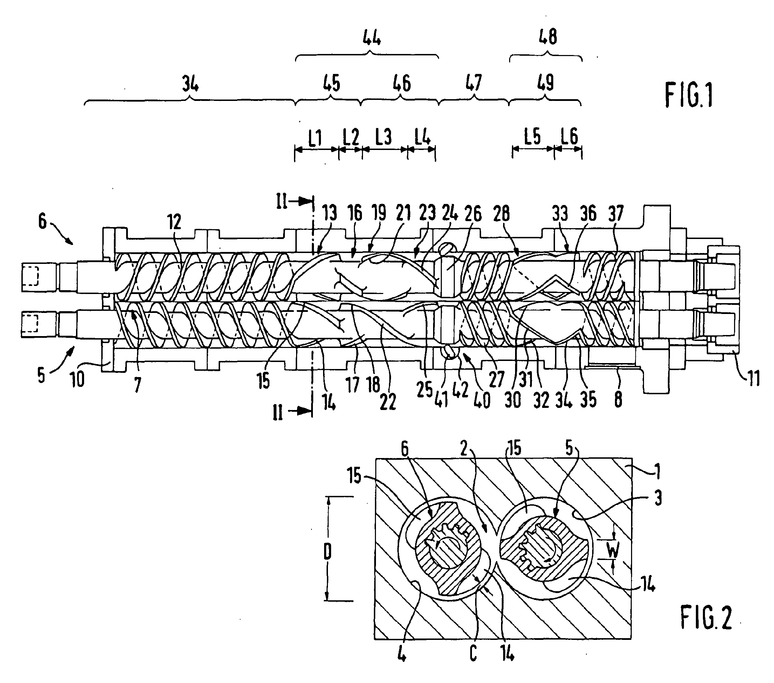

According to Fig. 1 and 2, the extruder has a body 1 forming a chamber 2 comprising to cylindrical barrels 3 and 4 which communicate with each other. Each barrel 3, 4 houses a rotor 5, 6 which rotate in opposite directions as shown by the arrows in Fig. 2 and are axis-parallel.

On the upper side at the left end or upstream side of the extruder shown in Fig. 1 a supply port 7, shown with a dotted line, is provided to supply the powder material to be mixed in chamber 2. At the right hand or downstream side of the extruder in Fig. 1 a discharge port 8 is provided for discharging the mixed molten material into a gear pump from which it is passed through a die plate, after which it is cooled and solidified and cut to pellets (not shown).

The two rotors 5, 6 are supported rotatably at both axial ends with bearings in end plates 10, 11 and are driven in opposite direction by a drive not shown.

Disposed on each rotor 5, 6 are from the left to the right side in Fig. 1 screw elements 12 with two flights, elements 13 each with two forward-conveying wings 14, 15, elements 16 each with two backward-conveying wings 17, 18, elements 19 each with two forward-conveying wings 21, 22, elements 23 each with two backward-conveying wings 24, 25, ring-like throttle elements 26, screw elements 27 with three flights, elements 28 each with three forward-conveying wings 30, 31, 32, elements 33 each with three backward-conveying wings 34, 35, 36, and screw elements 37 with three flights. The elements 12, 13, 16, 19, 23, 27, 28, 33 and 37 may be fixed to the rotor shafts by splining. However, it is also possible to make the complete rotor in one piece, e.g. in forged steel.

The throttle valve 40 is formed by rotary slot bars 41 extending across the rotors 5, 6 and rotating in a semi-circular depression 42 in the barrels 3, 4.

The screw elements 12 form a first conveying section 34 for feeding the material from the supply port 7 downward to a first mixing section 44 which comprises a first mixing zone 45 and a second mixing zone 46. Each mixing zone 45, 46 has two forward-conveying wings 14, 15 and 21, 22, respectively, and two backward-conveying wings 17, 18 and 24, 25, respectively, on each rotor 5, 6.

In the first mixing section 44, mainly dispersive mixing takes place, so that the particles of the powder material to be mixed are broken up. In the first mixing section 44, the material is molten mainly due to shear forces and partly by external heating. In the first mixing zone 45, the polymer material starts to melt and continues to melt in the second mixing zone 46.

From the throttle valve 40 the molten material flows to screw elements 27 which form a second conveying section 47 and feed the molten material to a second mixing section 48 which comprises only one mixing zone 49 which has three forward-conveying wings 30, 31, 32 and three backward-conveying wings 34, 35, 36 on each rotor 5, 6. In the second mixing section 48, mainly distributive mixing occurs, that is, the melt is kneaded further to distribute the different polymers, fillers, additives and so forth homogeneously in the melt. From the second mixing section 48, the polymer melt is discharged through discharge port 8.

The upstream ends of the forward-conveying wings 14, 15 of the first mixing zone 45 of the first mixing section 44 are positioned at the downstream ends of the flights of the screws 12 of the first conveying section 34, and the upstream ends of the forward-conveying wings 30, 31, 32 of the mixing zone 49 of the second mixing section 48 are positioned at the downstream ends of the flights of the screws 27 of the second conveying section 47.

In the first mixing section 44 in each mixing zone 45, 46, the forward-conveying wings 14, 15 and 21, 22, respectively, and the upstream ends of the backward-conveying wings 17, 18 and 24, 25, respectively, are offset with an angle of 90° in the circumferential direction, and the downstream ends of the backward-conveying wings 17, 18 of the first mixing zone 45 and the upstream ends of the forward-conveying wings 24, 25 of the second mixing zone are also offset by an angle of 90° in the circumferential direction to form a passage for the material to be mixed.

In contrast to this, the downstream ends of the forward-conveying wings 30, 31, 32 and the backward-conveying wings 34, 35, 36 of the mixing zone 49 of the second mixing section 48 are positioned to form a "V".

The axial lengths L1, L3 and L5 of the forward-conveying wings 14, 15; 21, 22; 30, 31, 32 is longer than the length L2, L4 and L6 of the backward-conveying wings 17, 18; 24, 25; 34, 35, 36. Furthermore, the length L2 of the backward-conveying wings 17, 18 in the first mixing zone 45 is shorter than the length L4 of the backward-conveying wings 24, 25 in the second mixing zone 46 of the first mixing section 44. Thus, the ratio of the length of the wings to the inner barrel diameter D is, for instance L1/D=L3/D=L5/D=1, L2/D=0.5, L4/D=0.75 and L6/D=0.5.

The lead or pitch of the wings 14, 15; 17, 18; 21, 22; 24, 25; 30, 31, 32; 34, 35, 36 is for instance 4, and, usually, the same for all wings.

In the first mixing section 44, the radial clearance C of the wings 14, 15; 17, 18 of the first mixing zone 45 is greater than the radial clearance C of the wings 21, 22; 24, 25 in the second mixing zone 46 of the first mixing section 44. Based on the diameter D of the barrels 3, 4, the radial clearance C may vary between 0.01 and 0.05 D.

The tip width W of the wings 14, 15, 17, 18, 21, 22, 24, 25, 30, 31, 32, 34, 35, 36 may vary between 0.01 and 0.05 D.

### Examples

### Example 1

The counter-rotating twin screw extruder as shown in Fig. 1 was used having a barrel diameter D of 90 mm, a length of the chamber 2 before the throttle valve 40 of 7.5 and after the throttle valve 40 of 3.5 based on the diameter D of the barrels, and equipped with a gear pump at the discharge port and a pelletizer.

The number of the wings 14, 15, 17, 18, 21, 22 and 24, 25 of the first mixing section 44 was 2, the number of the wings 30, 31, 32 and 34, 35, 36 of the mixing zone 49 of the second mixing section 48 was 3. Screws 12 had two flights and screws 27 three. The radial clearance C was 3.9 mm for the forward-conveying wings 14, 15 and backward-conveying wings 17, 18 of the first mixing zone 45, 2.0 mm for the forward-conveying wings 21, 22 and backward-conveying wings 24, 25 of the second mixing zone 46 and 1.5 mm for the forward-conveying wings 30, 31, 32 and backward-conveying wings 34, 35, 36 of the second mixing section 48. The lead was 4 for all wings and the L/D ratios were L1/D=L3/D=L5/D=1; L2/D=0.5; L4/D=0.75 and L6/D=0.5.

As polymer material bimodal polyethylene prepared according to Inventive Material C of Example 3 of WO 00/22040 was used, except that 1-butene was used as a comonomer instead of 1-hexene and the hydrogen to ethylene ratio in the loop reactor was adjusted so that the polymer produced in the loop reactor had an MFR₂ of 400g/10 min. Further, the 1-butene to ethylene ratio in the gas phase reactor was adjusted so that the density of the resin was 0.951 g/cm³ and hydrogen to ethylene ratio in the gas phase reactor was adjusted so that the bimodal polymer resin had a melt index MFR₅ of 0.25 g/10 min and MFR₂₁ of 9.5 g/10 min, where MFR₅ and MFR₂₁ were determined according to ISO 1133:1997, conditions T and G, respectively. Density was determined according to ISO 1183-1987. Into the polymer material were added about 2.3% by weight carbon black and about 0.35% of antioxidants and stabilisers. The polymer material was fed with a throughput of about 240 kg/h. The SEI was calculated on the basis of the power consumption of the drive motor. The white spots of the product were rated according to ISO 11420: 1996 (E).

### Comparative Example 2

Example 1 was repeated with an extruder having the same barrel diameter, L/D ratios, throttle valve and other equipment. However, it had only one mixing section upstream the throttle valve. The mixing section consisted of two forward-conveying wing elements followed by a backward-conveying wing element. All wing elements had 2 flights, a radial clearance of 2 mm, a lead of 4 and an L/D ratio of 1.

The same polymer material with the same throughput was used as in Example 1.

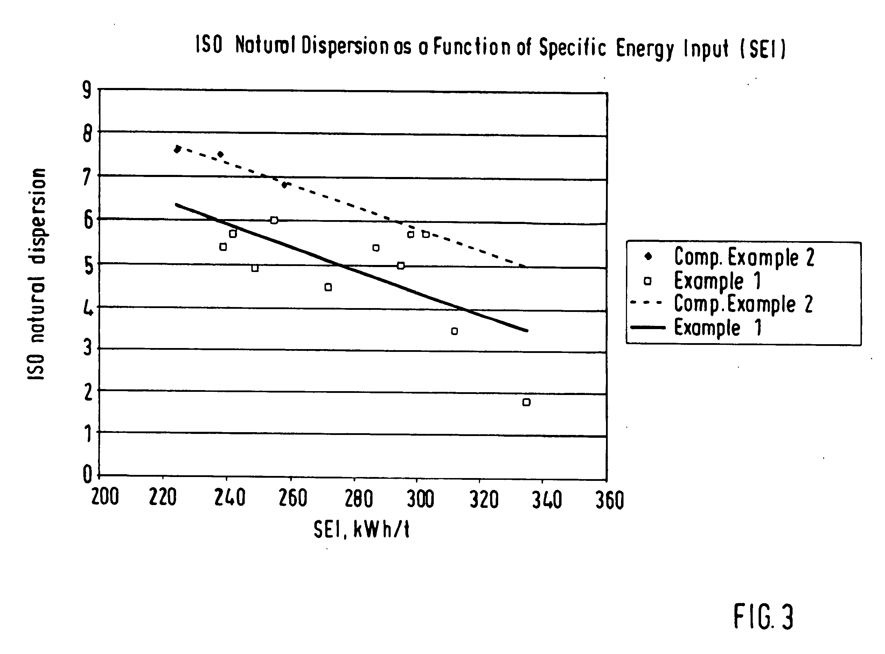

The results of Example 1 in comparison to Example 2 are shown in Fig. 3. It is evident from Fig. 3 that the inventive concept makes it possible to reach a given homogeneity level of the polymer with a lower specific energy input (SEI). This reduces the risk of degradation of the polymer and thereby a combination of good mechanical properties and good homogeneity can be achieved.

### Example 3

Example 1 was repeated with a larger extruder having a barrel diameter D of 380 mm. The throughput was 24 t/h. The polymer material and all other parameters were the same as in Example 1. The rating for the homogeneity according to the method ISO 11420: 1996 (E) was 5.2, the SEI 215 kWh/t.

### Comparative Example 4

Comparative Example 2 was repeated with a larger extruder having a barrel diameter D of 380 mm as in Example 3. All other parameters of the extruder were the same as in Comparative Example 3. The throughput and the polymer material were the same as in Example 3. The rating for the homogeneity according to ISO 11420: 1996 (E) was 7.2, the SEI 245 kwh/t.

### Example 5

Example 3 was repeated, except that another polymer was used. The polymer was prepared otherwise in a similar way than in Example 1, but the gas phase reactor conditions were adjusted so that the bimodal polymer had MFR₅ of 0.25 g/10 min and MFR₂₁ of 6.7 g/10 min.

The rating according to the method ISO 11420: 1996 (E) was 4.4; the SEI was 210 kWh/t.

### Example 6

Example 5 was repeated, except that another polymer was used. The polymer was prepared otherwise in a similar way than in Example 1, but the gas phase reactor conditions were adjusted so that the bimodal polymer had MFR₅ of 0.30 g/10 min and MFR₂₁ of 11 g/10 min. The rating according to ISO 11420: 1996 (E) was 2.9, the SEI was 195 kWh/t.

### Example 7

Example 5 was repeated, except that another polymer was used. The polymer was prepared otherwide in a similar way than in Example 1, but the gas phase reactor conditions were adjusted so that the bimodal polmer had MFR₂ of 0.50 g/10 min and MFR₅ of 2.0 g/10 min and density of 0.942 g/cm³, where MFR₂ and MFR₅ were determined according to ISO 1133:1997, conditions D and T, respectively. The rating according to ISO 11420: 1996 (E) was 1.2, the SEI was 200 kWh/t.

### Comparative Example 8 to 10

Examples 5 to 7 were repeated with the big extruder according to Comparative Example 4.

The ratings according to ISO 11420: 1996 (E) were 7.2; 4.4 and 1.6, respectively, the SEI were 240, 230 and 245 kWh/t, respectively.

## Claims

1. Use of a screw extruder having a body (1) forming a chamber (2) of two barrels (3, 4) housing two counter-rotating axis-parallel rotors (5, 6), a supply port (7) for the material to be mixed in the chamber (2) at one end of the body (1), a discharge port (8) for discharging the mixed material at the other end of the body (1), a first conveying section (34) with screws (12) for feeding the material from the supply port (7) downstream to a first mixing section (44) which comprises at least one forward conveying wing (14, 15; 21, 22) and at least one backward conveying wing (17, 18; 24, 25) downstream of the forward conveying wing (14, 15; 21, 22), a throttle valve (40) downstream of the mixing section (44) and downstream of the throttle valve (40) a second conveying section (47) with screws (27) and a second mixing section (48) in each rotor (5, 6), **characterized in that** the first mixing section (44) comprises at least two two mixing zones (45, 46), each mixing zone (45, 46) having at least one forward conveying wing (14, 15; 21, 22) and at least one backward conveying wing (17, 18; 24, 25) downstream of the forward conveying wing (14, 15; 21, 22) on each rotor (5, 6) for compounding multimodal polymer compositions.

2. The use according to claim 1 **characterized in that** the downstream ends of the forward conveying wings (14, 15; 21, 22) and the upstream ends of the backward-conveying wings (17, 18; 24, 25) of each mixing zone (45, 46) of the first mixing section (44) are offset to form a passage for the material to be mixed.

3. The use according to claim 1 or 2 charcterized in that the downstream ends of the backward-conveying wings (17, 18) of the first mixing zone (45) on the side of the conveying section (34) and the upstream ends of the forward-conveying wings (21, 22) of the mixing zone (46) downstream of the first mixing zone (45) are offset to form a passage for the material to be mixed.

4. The use according to any one of the preceding claims **characterized in that** the length (L2) of the backward-conveying wings (17, 18) in the first mixing zone (45) is shorter than the length (L4) of the backward-conveying wings (24, 25) in the mixing zone (46) downstream of the first mixing zone (45).

5. The use according to any one of the preceding claims **characterized in that** the radial clearance (C) of the wings (11, 14; 17, 18) of the first mixing zone (45) is greater than the radial clearance (C) of the wings (21, 22; 24, 25) of the mixing zone (46) downstream of the first mixing zone (45).

6. The use according to claim 1 **characterized in that** the second mixing section (48) comprises at least one mixing zone (49) consisting of at least one forward-conveying wing (30, 31, 32) and at least one backward-conveying wing (34, 35, 36) downstream of the forward-conveying wing (30, 31, 32).

7. The use according to claim 1 **characterized in that** the forward-conveying wings (30, 31, 32) and the backward-conveying wings (34, 35, 36) of the mixing zone (49) of the second mixing section (48) are positioned to form continuous flights in the shape of a "V".

8. The use according to any one of the preceding claims **characterized in that** the number of the forward-conveying wings (14, 15; 21, 22; 30, 31, 32) and of the backward-conveying wings (17, 18; 24, 25; 34, 35, 36) of each mixing zone (45, 46, 49) corresponds to the number of the flights of the screws (12, 27) of the conveying sections (34, 47) upstream of the respective mixing zone (45, 46, 49).

9. The use according to any one of the preceding claims **characterized in that** the length (L1, L3, L5) of the forward-conveying wings (14, 15; 21, 22; 30, 31, 32) of each mixing zone (45, 46, 49) is longer than the length (L2, L4, L6) of the backward-conveying wings (17, 18; 24, 25; 34, 35, 36) of said mixing zone (45, 46, 49).

10. The use according to any one of the preceding claims **characterized in that** the ratio of the length (L1 to L6) of the wings (14, 15; 17, 18; 21, 22; 24, 25; 30, 31, 32; 34, 35, 36) to the barrel diameter (D) is 0.3 to 2.0.

11. The use according to any one of the preceding claims **characterized in that** the lead of the wings (14, 15; 17, 18; 21, 22; 24, 25; 30, 31, 32; 34, 35, 36) of the first mixing section (44) and/or the second mixing section (48) is 2 to 6 times to barrel diameter (D).

12. Use according to claim 1 **characterized in that** the specific energy input for compounding a multimodal olefin polymer is lower than 300 kWh/t.

## Patentansprüche

1. Verwendung eines Schneckenextruders, der folgendes aufweist: einen Körper (1), der eine Kammer (2) aus zwei Trommeln (3, 4) bildet, die zwei gegenläufige Rotoren (5, 6) mit parallelen Achsen aufnehmen, eine Zuführungsöffnung (7) für das in der Kammer (2) zu mischende Material an einem Ende des Körpers (1), eine Auslaßöffnung (8) für die Abgabe des gemischten Materials am anderen Ende des Körpers (1), einen ersten Förderabschnitt (34) mit Schnecken (12) für das Zuführen des Materials von der Zuführungsöffnung (7) stromabwärts zu einem ersten Mischabschnitt (44), der zumindest einen vorwärts befördernden Flügel (14, 15; 21, 22) und zumindest einen rückwärts befördernden Flügel (17, 18; 24, 25) stromabwärts des vorwärts befördernden Flügels (14, 15; 21, 22) umfaßt, ein Drosselventil (40) stromabwärts des Mischabschnitts (44) und stromabwärts des Drosselventils (40) einen zweiten Förderabschnitt (47) mit Schnecken (27) und einen zweiten Mischabschnitt (48) in jedem Rotor (5, 6),
**dadurch gekennzeichnet, daß** der erste Mischabschnitt (44) zumindest zwei Mischzonen (45, 46) umfaßt, wobei jede Mischzone (45, 46) zumindest einen vorwärts befördernden Flügel (14, 15; 21, 22) und zumindest einen rückwärts befördernden Flügel (17, 18; 24, 25) stromabwärts des vorwärts befördernden Flügels (14, 15; 21, 22) auf jedem Rotor (5, 6) umfaßt, für das Vermengen von multimodalen Polymerzusammensetzungen.

2. Verwendung nach Anspruch 1, **dadurch gekennzeichnet, daß** die stromabwärtigen Enden der vorwärts befördernden Flügel (14, 15; 21, 22) und die stromaufwärtigen Enden der rückwärts befördernden Flügel (17, 18; 24, 25) jeder Mischzone (45, 46) des ersten Mischabschnitts (44) versetzt sind, so daß ein Durchlaß für das zu mischende Material gebildet wird.

3. Verwendung nach Anspruch 1 oder 2, **dadurch gekennzeichnet, daß** die stromabwärtigen Enden der rückwärts befördernden Flügel (17, 18) der ersten Mischzone (45) auf der Seite des Förderabschnittes (34) und die stromaufwärtigen Enden der vorwärts befördernden Flügel (21, 22) der Mischzone (46) stromabwärts der ersten Mischzone (45) versetzt sind, so daß ein Durchlaß für das zu mischende Material gebildet wird.

4. Verwendung nach einen der vorstehenden Ansprüche, **dadurch gekennzeichnet, daß** die Länge (L2) der rückwärts befördernden Flügel (17,18) in der ersten Mischzone (45) geringer als die Länge (L4) der rückwärts befördernden Flügel (24, 25) in der Mischzone (46) stromabwärts der ersten Mischzone (45) ist.

5. Verwendung nach einem der vorstehenden Ansprüche, **dadurch gekennzeichnet, daß** der radiale Zwischenraum (C) der Flügel (11, 14; 17, 18) der ersten Mischzone (45) größer als der radiale Zwischenraum (C) der Flügel (21, 22; 24, 25) der Mischzone (46) stromabwärts der ersten Mischzone (45) ist.

6. Verwendung nach Anspruch 1, **dadurch gekennzeichnet, daß** die zweite Mischzone (48) zumindest eine Mischzone (49) umfaßt, die aus zumindest einem vorwärts befördernden Flügel (30, 31, 32) und zumindest einem rückwärts befördernden Flügel (34, 35, 36) stromabwärts des vorwärts befördernden Flügels (30, 31, 32) besteht.

7. Verwendung nach Anspruch 1, **dadurch gekennzeichnet, daß** die vorwärts befördernden Flügel (30, 31, 32) und die rückwärts befördernden Flügel (34, 35, 36) der Mischzone (49) des zweiten Mischabschnitts (48) so angeordnet sind, daß kontinuierliche Gänge in Form eines "V" gebildet werden.

8. Verwendung nach einem der vorstehenden Ansprüche, **dadurch gekennzeichnet, daß** die Anzahl der vorwärts befördernden Flügel (14, 15; 21, 22; 30, 31, 32) und der rückwärts befördernden Flügel (17, 18; 24, 25; 34, 35, 36) jeder Mischzone (45, 46, 49) der Anzahl der Gänge der Schnecken (12, 27) der Förderabschnitte (34, 47) stromaufwärts der entsprechenden Mischzone (45, 46, 49) entspricht.

9. Verwendung nach einem der vorstehenden Ansprüche, **dadurch gekennzeichnet, daß** die Länge (L1, L3, L5) der vorwärts befördernden Flügel (14, 15; 21, 22; 30, 3 1, 32) jeder Mischzone (45, 46, 49) größer als die Länge (L2, L4, L6) der rückwärts befördernden Flügel (17, 18; 24, 25; 34, 35, 36) der Mischzone (45, 46, 49) ist.

10. Verwendung nach einem der vorstehenden Ansprüche, **dadurch gekennzeichnet, daß** das Verhältnis zwischen der Länge (L1 bis L6) der Flügel (14, 15; 17, 18; 21, 22; 24, 25; 30, 31, 32; 34, 35, 36) und dem Trommeldurchmesser (D) 0,3 bis 2,0 beträgt.

11. Verwendung nach einem der vorstehenden Ansprüche, **dadurch gekennzeichnet, daß** die Ganghöhe der Flügel (14, 15; 17, 18; 21, 22; 24, 25; 30, 31, 32; 34, 35, 36) des ersten Mischabschnitts (44) und/oder des zweiten Mischabschnitts (48) das 2- bis 6-fache des Trommeldurchmessers (D) beträgt.

12. Verwendung nach Anspruch 1, **dadurch gekennzeichnet, daß** die spezifische Energiezufuhr zum Vermengen eines multimodalen Olefinpolymers weniger als 300 kWh/t beträgt.

## Revendications

1. Utilisation d'une extrudeuse à vis ayant un corps (1) formant une chambre (2) de deux cylindres (3, 4) renfermant deux rotors contrarotatifs d'axes parallèles (5, 6), un orifice d'alimentation (7) pour le matériau devant être mélangé dans la chambre (2) situé à l'une des extrémités du corps (1), un orifice de décharge (8) pour décharger le matériau mélangé situé à l'autre extrémité du corps (1), une première section de transport (34) ayant des vis (12) destinées à acheminer le matériau depuis l'orifice d'alimentation (7) vers l'aval jusqu'à une première section de mélange (44) comprenant au moins une aile de transport vers l'avant (14, 15 ; 21, 22) et au moins une aile de transport vers l'arrière (17, 18 ; 24, 25) située en aval de l'aile de transport vers l'avant (14, 15 ; 21, 22), une soupape d'étranglement (40) située en aval de la section de mélange (44) et, en aval de la soupape d'étranglement (40), une seconde section de transport (47) ayant des vis (27) et une seconde section de mélange (48) dans chacun des rotors (5, 6), **caractérisée en ce que** la première section de mélange (44) comprend au moins deux zones de mélange (45, 46), chacune des zones de mélange (45, 46) ayant au moins une aile de transport vers l'avant (14, 15 ; 21, 22) et au moins une aile de transport vers l'arrière (17, 18 ; 24, 25) située en aval de l'aile de transport vers l'avant (14, 15 ; 21, 22) sur chaque rotor (5, 6) afin de mélanger des compositions de polymères multimodales.

2. L'utilisation selon la revendication 1 **caractérisée en ce que** les extrémités aval des ailes de transport vers l'avant (14, 15 ; 21, 22) et les extrémités amont des ailes de transport vers l'arrière (17, 18; 24, 25) de chaque zone de mélange (45, 46) de la première section de mélange (44) sont décalées de façon à former un passage pour le matériau devant être mélangé.

3. L'utilisation selon la revendication 1 ou la revendication 2 **caractérisée en ce que** les extrémités aval des ailes de transport vers l'arrière (17, 18) de la première zone de mélange (45) située sur le côté de la section de transport (34) et les extrémités amont des ailes de transport vers l'avant (21, 22) de la zone de mélange (46) située en aval de la première zone de mélange (45) sont décalées de façon à former un passage pour le matériau devant être mélangé.

4. L'utilisation selon l'une quelconque des revendications précédentes **caractérisée en ce que** la longueur (L2) des ailes de transport vers l'arrière (17, 18) situées dans la première zone de mélange (45) est plus petite que la longueur (L4) des ailes de transport vers l'arrière (24, 25) situées dans la première zone de mélange (46) en aval de la première zone de mélange (45).

5. L'utilisation selon l'une quelconque des revendications précédentes **caractérisée en ce que** le jeu radial (C) des ailes (11, 14 ; 17, 18) de la première zone de mélange (45) est plus grand que le jeu radial (C) des ailes (21, 22 ; 24, 25) de la zone de mélange (46) située en aval de la première zone de mélange (45).

6. L'utilisation selon la revendication 1 **caractérisée en ce que** la seconde section de mélange (48) comprend au moins une zone de mélange (49) constituée d'au moins une aile de transport vers l'avant (30, 31, 32) et au moins aile de transport vers l'arrière (34, 35, 36) située en aval de l'ail de transport vers l'avant (30, 31, 32).

7. L'utilisation selon la revendication 1 **caractérisée en ce que** les ailes de transport vers l'avant (30, 31, 32) et les ailes de transport vers l'arrière (34, 35, 36) de la zone de mélange (49) de la seconde section de mélange (48) sont agencées de façon à former des filets continus en forme de « V ».

8. L'utilisation selon l'une quelconque des revendications précédentes **caractérisée en ce que** le nombre d'ailes de transport vers l'avant (14, 15 ; 21, 22 ; 30, 31, 32) et d'ailes de transport vers l'arrière (17, 18 ; 24, 25 ; 34, 35, 36) de chaque zone de mélange (45, 46, 49) correspond au nombre de filets des vis (12, 27) des sections de transport (34, 47) situées en amont de la zone de mélange respective (45, 46, 49).

9. L'utilisation selon l'une quelconque des revendications précédentes **caractérisée en ce que** la longueur (L1, L3, L5) des ailes de transport vers l'avant (14, 15 ; 21, 22 ; 30, 31, 32) de chacune des zones de mélange (45, 46, 49) est plus grande que la longueur (L2, L4, L6) des ailes de transport vers l'arrière (17, 18 ; 24, 25 ; 34, 35, 36) de ladite zone de mélange (45, 46, 49).

10. L'utilisation selon l'une quelconque des revendications précédentes **caractérisée en ce que** le rapport de la longueur (L1 à L6) des ailes (14, 15 ; 17, 18 ; 21, 22 ; 24, 25 ; 30, 31, 32 ; 34, 35, 36) et du diamètre de cylindre (D) est de 0,3 à 2,0.

11. L'utilisation selon l'une quelconque des revendications précédentes **caractérisée en ce que** le pas des ailes (14, 15 ; 17, 18 ; 21, 22 ; 24, 25 ; 30, 31, 32 ; 34, 35, 36) de la première section de mélange (44) et/ou de la seconde section de mélange (48) représente 2 à 6 fois le diamètre de cylindre (D).

12. L'utilisation selon la revendication 1 **caractérisée en ce que** l'entrée d'énergie spécifique nécessaire au mélange d'un polymère d'oléfine multimodal est inférieure à 300 kWh/t.
